# EUROPEAN PATENT APPLICATION

(11) **EP 2 665 166 A2**
(43) Date of publication of application: **20.11.2013**
(21) Application number: 13167950.8
(22) Date of filing: 15.05.2013
(51) Int. Cl.: H02K 35/02

(54) **System and Methods for Generating Electricity**

(30) Priority: 14.05.2012 US 201261646670 P; 15.05.2012 US 201213472252
(71) Applicant: Weiss, Gene, Highland Park, IL 60035 (US)
(72) Inventor: Weiss, Gene, Highland Park, IL 60035 (US)
(74) Representative: O'Connor, Michael Donal

(57) **Abstract**

A system and methods for generating electricity through a commensal relationship between a moving object and a generation unit. A generation unit includes a generation unit magnet positioned to pass through an induction coil. In certain embodiments, a moving magnet associated with a moving object attracts the generation unit magnet and, accordingly, causes the generation unit magnet to pass through the induction coil. The passage of the generation unit magnet through the induction coil generates electricity.

## Description

### PRIORITY CLAIM

This Application claims the benefit of U.S. Provisional Patent Application Serial Number 61/646,670 filed May 14, 2012.

### FIELD OF THE INVENTION

The present invention relates to generating electricity. More specifically, the present invention relates to the generation of electricity through a commensal relationship between a generation unit and a moving object. In certain embodiments of the present invention, electricity is generated by the attraction of a first magnet to a second magnet, where the first magnet is positioned to pass through an induction coil and the second magnet is connected to a moving object.

### BACKGROUND OF THE INVENTION

Today, the United States uses energy that largely comes from a variety of conventional sources. Approximately 83 percent of energy consumed in the United States is generated from fossil fuels such as petroleum, coal, or natural gas. Another approximately 8.5 percent of energy consumed in the United States is generated from nuclear power.

A variety of disadvantages are associated with these conventional sources of energy. Fossil fuel based energy sources produce carbon emissions and cause other pollution, permit accidents in distribution and transportation such as oil spills or gas leaks, and cause political conflict with other countries regarding access to fossil fuels. Further, nuclear energy sources require the transportation and storage of radioactive waste, and certain nuclear energy sources lack stability in a natural disaster like an earthquake.

Generally, a portion of the energy produced by conventional energy sources is consumed as electricity. Electricity is typically generated on a large scale and distributed to consumers through an electricity distribution grid. Complications may arise within a grid that can affect consumers who obtain electricity from that grid. A blackout - that is, a complete loss of electrical power supply - or a brownout - that is, a drop in voltage in the electrical power supply - may result from disruptions in the grid.

Clearly, a source of electricity that does not have the disadvantages associated with the conventionally produced large scale electricity sources would be beneficial. Certain devices that generate electricity using a non-conventional source of energy have been developed.

For example, solar panels generate electricity from sunlight. However, solar panels have limitations including a requirement for considerable land area in order to produce large scale power and the inability to generate electricity during the night when there is no sunlight. Also, solar panels may limit the desired uses or disrupt the desired aesthetic of a yard, a rooftop, or a land area.

Another known device for generating electricity is a wind turbine which uses wind power. Wind turbines can be used successfully in locations that experience extended periods of windy conditions, which are typically rural areas. However, wind turbines have limited efficiency and may be worn down in locations such as urban areas where the wind is less prevalent and air is choppy because of trees and the variation in heights of buildings. Also, a malfunctioning wind turbine such as a blade that breaks may cause damage to the surrounding buildings, land, or people. In addition, wind turbines may limit the desired uses or disrupt the desired aesthetic of a yard, a rooftop, or a land area.

Another known device generates electricity by using hydropower - that is, the force of moving water. Electricity may be generated by harnessing energy from waves on the surface of water, changes in tide, current in rivers or streams, or potential energy of dammed water. Such electricity generation is limited to locations that have ample water sources. Also, damming a body of water to construct a hydroelectric power station may cause environmental damage and may limit the land use in the surrounding area. Power stations for producing hydropower may cause substantial methane (a potent greenhouse gas) emissions from decaying plant material sometimes present in the reservoirs of the power station.

In addition to large scale electricity generation, known devices can generate electricity on a small scale. One such known device generates electricity by using the weight of a moving vehicle. The moving vehicle depresses a plate, which compresses a piston mechanism and then converts mechanical energy into electrical energy. The plate-piston mechanism includes limitations such as a complicated structure requiring many moving parts.

Another known device for small scale electricity generation uses simple mechanical energy. A Faraday flashlight device is generally used by shaking a flashlight containing a magnet, where the magnet passes through a coil during shaking. A small amount of electrical current is generated in a coil, and the electricity is stored in a capacitor until use of the flashlight is desired. To function properly, the method for using this device requires shaking of the entire device to generate an electrical current. Further, the capacitor within the flashlight typically provides limited storage capacity since the capacitor is generally small enough to be lifted and carried around easily.

Given the various disadvantages and limitations of conventional and non-conventional electricity sources, there is a demand for a simplified system and method of generating electricity. The present invention satisfies this demand.

### SUMMARY OF THE INVENTION

Embodiments of the present invention include a generation unit, which is configured to generate electricity. The present invention relates to the generation of electricity through a commensal relationship between a generation unit and a moving object which moves relative to or within the generation unit. As a result of this commensal relationship, any energy used to power the moving object may be used to generate electricity in the generation unit.

In certain embodiments, a generation unit includes a generation unit magnet. A generation unit magnet is made from a material that produces a magnetic field. A generation unit magnet may be positioned within a space in the generation unit. The space - termed a "chamber" for purposes of this application - may be defined by an induction coil, a chamber wall, a boundary element, or some combination.

In certain embodiments, the moving object is any object that is capable of moving relative to or within a generation unit and capable of being associated with a magnet. In certain embodiments, the moving object is positioned within the generation unit and is associated with a generation unit magnet via a physical connection. In such embodiments, the generation unit magnet may be a component that is intrinsic to a conventional configuration of the moving object, while other moving objects may be configured to include a generation unit magnet. Embodiments of a physical connection between a moving object and a generation unit magnet may include an extension from a moving object, an adhesive, or any known method of physically connecting the moving object to a generation unit magnet.

In such embodiments, the moving object and the physically connected generation unit magnet move through the chamber, including the portion of the chamber defined by an induction coil - termed a "coil space" for purposes of this application. Such movement of the generation unit magnet causes electron current - that is, electricity - in the induction coil.

An example of such an embodiment includes a generation unit magnet configured as a frame of an elevator cab, which is comprised of a material that produces a magnetic field. In such an embodiment, an induction coil may be positioned around the chamber configured as an elevator shaft such that the movement of the moving object - that is, the elevator cab - generates electricity. In a similar embodiment, the frame of a subway car produces a magnetic field to generate electricity by moving through a chamber such as a subway tunnel.

Such embodiments could be operated on a smaller scale as well. For example, a generation unit magnet may be physically connected to a fan axle or one or more fan blades, which are all rotating to move air. Such a fan could rotate the generation unit magnet within a coil space to generate electricity.

In certain embodiments, the moving object is positioned outside of the generation unit and is associated with a magnet termed a "moving magnet" for purposes of this application. Embodiments of a moving magnet are made from any material that may attract or repel and, therefore, cause movement of the generation unit magnet. Such embodiments of a moving magnet may be made from a ferromagnetic material such as iron, nickel, cobalt, certain metal alloys, lodestone, or other magnetized substance. Certain moving objects may include a moving magnet in the components intrinsic to the conventional configuration of the moving object, while other moving objects may be configured to include a moving magnet. Certain moving magnets are strong enough to influence the movement of a generation unit from a distance such that the generation unit may generate electricity in advance of the moving object reaching the location of the generation unit.

In certain embodiments, a generation unit may be positioned relative to a path and relative to the anticipated position of the moving object associated with a moving magnet such that the moving magnet will actuate movement of the generation unit magnet. The term "path" refers to any component in relation to which a generation unit may be positioned. In certain embodiments, the moving object moves relative to a path for a purpose other than electricity generation, such as transportation, amusement, communication, or education. A path may be largely stationary such as a road or may be in motion such as a conveyor belt. In certain embodiments, a moving object configured to be able to travel relative to a path may include a vehicle such as a car, truck, van, or sports-utility vehicle travelling on a road, an elevator moving up and down a shaft, a roller coaster on a track, a train on a railroad track, a subway car in a subway, a plane on a tarmac, a bottle on an assembly line, a platform rotating around a carousel, a conveyor belt rotating around two pulleys, a rotor which rotates around in a centrifuge, a fan in a heating, ventilating, and air conditioning unit, any object that has a spinning axle, or any object for which a directional movement is critical to its functioning.

In certain embodiments, the generation unit does not require a path. In certain embodiments, the generation unit may include a generation unit magnet that is connected to a moving object, as described above. In such an embodiment, the generation unit magnet and the moving object move through the chamber together. More specifically, such an embodiment may include an elevator configured to move through an induction coil - which is positioned around the chamber and the chamber is configured as an elevator shaft - such that the movement of the elevator cab generates electricity.

Certain embodiments of the present invention may include a generation unit, an external conveying component configured to receive and transfer electricity generated in the induction coil of the generation unit, and an electrically powered article. Such embodiments are termed a "local electric generating system" for purposes of this application. A local electric generating system or other embodiments of the present invention may be implemented in any property including a residential, industrial, commercial, or government property to increase local electricity generation using the commensal relationship between moving objects and generation units. Such an application of the present invention advantageously generates electricity near the location of the electricity consumer such that the consumer is not relying on the electricity distribution grid to obtain electricity. Other embodiments of the present invention generate electricity that is distributed to consumers through the electricity distribution grid.

It is an object of this invention to generate electricity through a commensal relationship between a moving object and a generation unit.

It is another object of this invention to provide a source of electricity that is an alternative to conventional sources.

It is another object of this invention to make electricity generation more efficient and affordable.

It is another object of this invention to harness energy from the movement of objects such that the energy used to power the moving objects is more useful.

The present invention and its attributes and advantages will be further understood and appreciated with reference to the detailed description below of presently contemplated embodiments, taken in conjunction with the accompanying drawings.

### BRIEF DESCRIPTION OF THE DRAWINGS

The invention can be better understood by reading the following detailed description of certain preferred embodiments, reference being made to the accompanying drawings in which:
FIG. 1 is a perspective view of an embodiment of a generation unit;
FIG. 2A is a perspective view of an induction coil;
FIG. 2B is a perspective view of an induction coil supported by a boundary element;
FIG. 2C is a perspective view of a first chamber wall adjacent to a first coil end of an induction coil and a second chamber wall adjacent to a second coil end of an induction coil;
FIG. 2D is a perspective view of an induction coil supported by a boundary element and an adjacent chamber wall;
FIG. 3A is a perspective view of a plurality of generation units positioned relative to a path configured as a road and a moving object configured as a vehicle;
FIG. 3B is a perspective view of a generation unit positioned relative to a path configured as a road and a moving object configured as a vehicle;
FIG. 3C is a perspective view of a generation unit positioned relative to a path configured as a road and a moving object configured as a vehicle;
FIG. 4A illustrates an external conveying component and an electrically powered article positioned relative to a path configured as a road and a moving object configured as a vehicle;
FIG. 4B is a perspective view of generation units, an external conveying component, and an electrically powered article;
FIG. 4C is a side view of generation units and an external conveying component;
FIG. 5A is a perspective view of a moving object configured physically connected to a generation unit magnet and configured to move within a chamber of a generation unit;
FIG. 5B is a perspective view of a moving object including a moving magnet configured to move relative to generation units, which are positioned relative to a path; and
FIGS. 6A - 6C illustrate the various positions of generation units in a continuous loop embodiment of a path.

### DETAILED DESCRIPTION OF EMBODIMENTS

Embodiments of a generation unit 10 are configured to generate electricity. Embodiments of a generation unit 10 include an induction coil 12 and a generation unit magnet 14.

Embodiments of the induction coil 12 are made from any material in which electricity is generated in response to a magnetic field. Certain embodiments include a wire 18 wound such that each turn of the wire 18 is adjacent to the next turn of the wire 18. Embodiments of an induction coil 12 also may include a malleable sheet configured to conduct electricity.

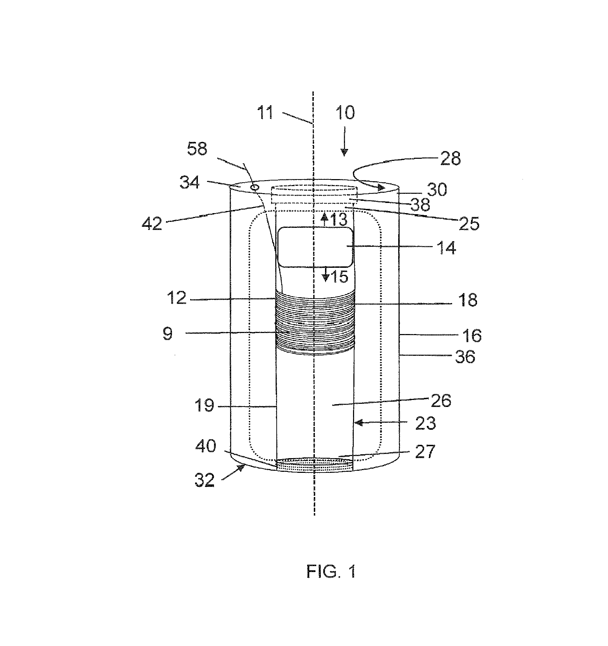

Embodiments of a generation unit magnet 14 are positioned within a chamber 26, as shown in FIG. 1. The generation unit magnet 14 is sized and shaped to move in a first direction 13 and a second direction 15 within the chamber 26. A chamber 26 may be defined by an induction coil 12, a chamber wall 19, a boundary element 20, or some combination.

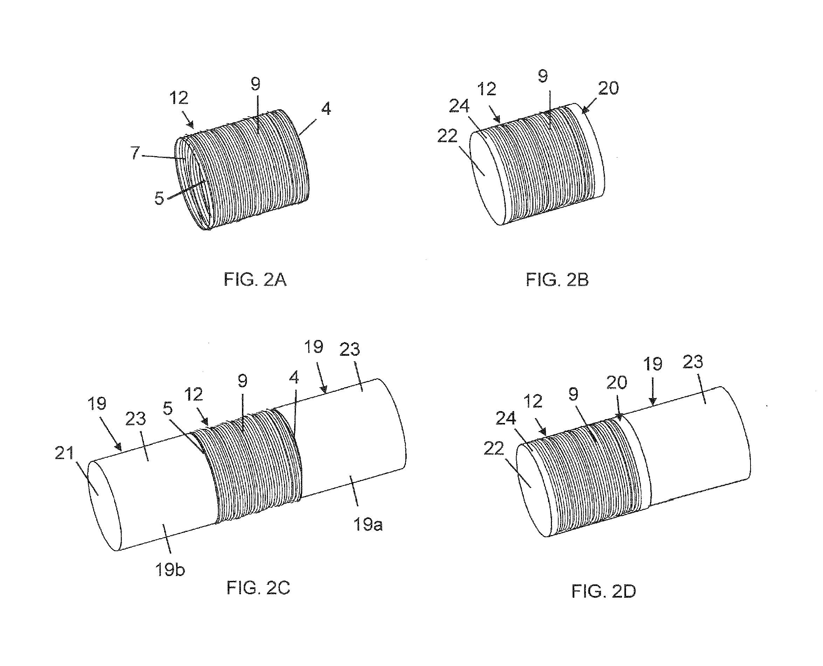

Embodiments of an induction coil 12 include an inner coil surface 7 and an outer coil surface 9, as shown in FIG. 2A. The inner coil surface 7 typically defines the coil space 17. Embodiments of the induction coil 12 are generally positioned such that the generation unit magnet 14 may pass through the coil space 17. Such movement of a generation unit magnet 14 through the induction coil 12 is configured to maximize electron current in the induction coil 12.

In certain embodiments, an induction coil 12 is configured to define the entire chamber 26 of the generation unit 10, while other embodiments include an induction coil 12 that defines a portion of the chamber 26. The portion of the chamber 26 inside of the induction coil 12 is the coil space 17.

In certain embodiments, a boundary element 20 including an inner boundary surface 22 and an outer boundary surface 24 is configured to support an induction coil 12, as shown in the embodiment of FIG. 2B. In such embodiments, the induction coil 12 may be wrapped around the outer boundary surface 24. The inner boundary surface 22 defines at least a portion of the chamber 26. A boundary element 20 is typically made from a non-conductive material that will not block or interfere with a magnetic field of the generation unit magnet 14.

Embodiments in which the induction coil 12 only defines a portion of the chamber 26 may include a chamber wall 19 including an inner wall surface 21 and an outer wall surface 23 - as shown in the embodiment of FIG. 1 and FIG. 2C - to define other portions of the chamber 26. In the embodiment shown in FIG. 2C, a first coil end 4 of the induction coil 12 is adjacent to a first chamber wall 19a and the second coil end 5 is adjacent to a second chamber wall 19b. More specifically, in such embodiments, the inner wall surface 21 defines a portion of the chamber 26 and the inner coil surface 7 defines a portion of the chamber 26. Embodiments of the chamber wall 19 may be made from a non-conductive material that does not block or interfere with a magnetic field of the generation unit magnet 14, or may be made from segmented soft iron tube to improve the efficiency of the device and help gather the magnetic field. A segmented soft iron tube may include a number of nails in a circular array with the respective axes parallel to one another.

In certain embodiments, as shown in FIG. 2D, an induction coil 12 supported by a boundary element 20 may be adjacent to a chamber wall 19 such that the inner boundary surface 22 and the inner wall surface 23 together define the chamber 26.

Certain embodiments of the present invention include more than one generation unit magnet 14 in a chamber 26. In such embodiments, a bumper component may be positioned between each generation unit magnet 14 to prevent or minimize harmful contact with each other generation unit magnet 14. In other embodiments, the generation unit magnets 14 may be configured to repel each other such that the magnets do not contact each other and no such bumper components are necessary.

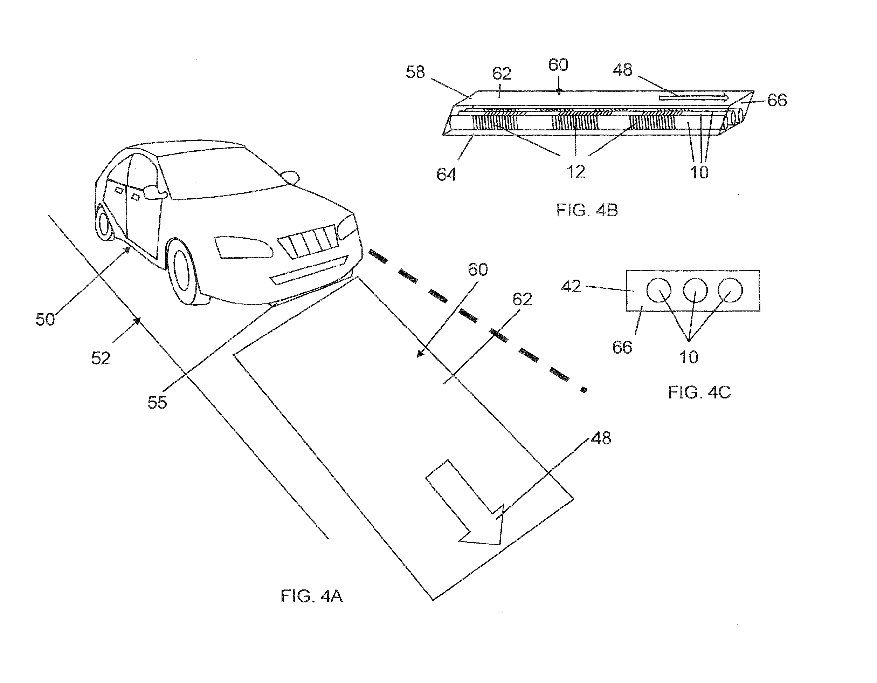

Certain embodiments of the present invention may include more than one chamber 26. In such embodiments, each chamber may be positioned, for example, adjacent to another chamber 26, as shown in FIG. 4B.

In certain embodiments, a chamber 26 is configured to have a first chamber end 25 and a second chamber end 27. In such embodiments, the distance between the first chamber end 25 and the second chamber end 27 may be smaller than an inch, may be many miles, or any length in between.

In certain embodiments, various components such as a rebounder component 40 or a cushion element 38 may be positioned in a chamber 26. A rebounder component 40 may be positioned such that the generation unit magnet 14 in motion within the chamber 26 will rebound from contact with the rebounder component 40 and, accordingly, increase the amount of times the generation unit magnet 14 passes through an induction coil 12. A cushion element 38 may be positioned in a chamber 26 such that contact with the cushion element 38 slows down or minimizes impact of the generation unit magnet 14. In the embodiment shown in FIG. 1, a cushion element 38 is positioned near the first chamber end 25, and a rebounder component 40 is positioned near the second chamber end 27.

Embodiments of a generation unit 10 may include an internal conveying component 42, which is a component capable of conveying electricity from the induction coil 12 to an external conveying component 58 located outside of the generation unit 10. In certain embodiments, an internal conveying component 42 may include wire, graphite, conductive plastic, conductive polymer, a fluid-filled compartmont, or any other component capable of conducting electricity. An external conveying component 58 may be configured as a wire, circuit, graphite, conductive plastic, conductive polymer, fluid-filled chamber, or any other component capable of conducting electricity. In the embodiment shown in FIG. 1, the external conveying component 58 is configured as a circuit. In the embodiment shown in FIG. 4A the external conveying component 58 is configured as a box 60 made from conductive plastic.

The components of the generation unit 10 may be positioned within a housing element 16. In the embodiment shown in FIG. 1, the housing element 16 is comprised of a first wall 32 opposing to a second wall 34, and a third wall 36 connecting the first wall 32 and second wall 34. The walls 32, 34, 36 may be configured to form an inner housing surface 28 and an outer housing surface 30. Certain embodiments of a housing element 16 include at least one wall or wall segment that can be removably attached from the remaining portions of the housing element 16 so as to provide easy access to the other components to achieve, for example, repairs or cleaning.

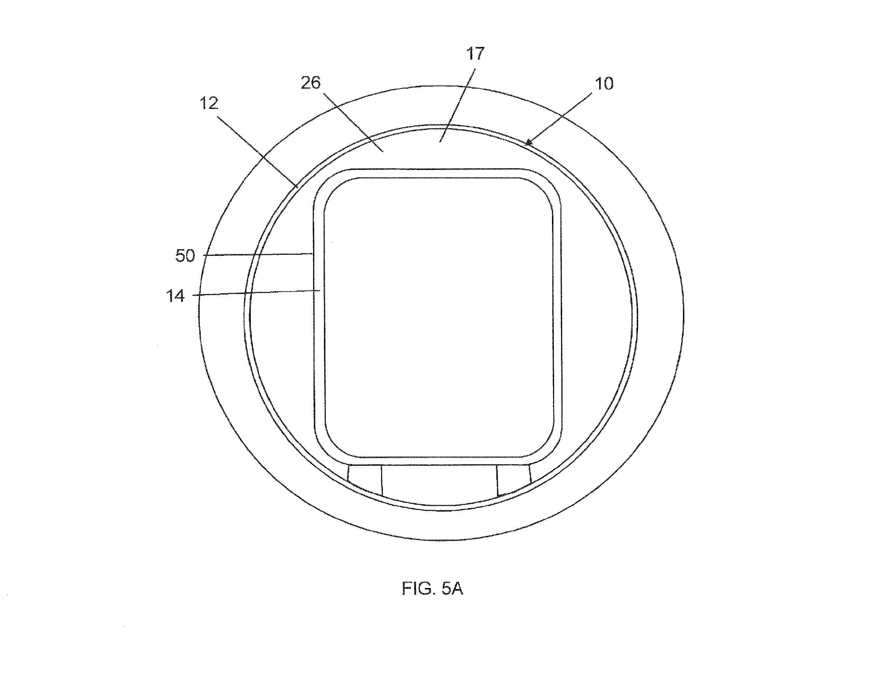

In certain embodiments, a moving object 50 is connected to a generation unit magnet 14 and is positioned within the generation unit 10. In the embodiment shown in FIG. 5A, the moving object 50 is configured as a subway car and the generation unit magnet 14 is configured as the frame of a subway car. In this embodiment, the chamber 26 through which the generation unit magnet 14 moves is the subway tunnel. The induction coil 12 may be positioned around the chamber 26, and may stretch the entire length of the subway tunnel or may only be present in certain portions of the subway tunnel. More specifically, the portions of the subway tunnel space within the induction coil 12 comprise the coil space 17. Similar embodiments in which a moving object 50 is attached to a generation unit magnet 14 include, for example, a train, including a model train or a cargo/passenger train, travelling through a tunnel and an elevator moving through a shaft.

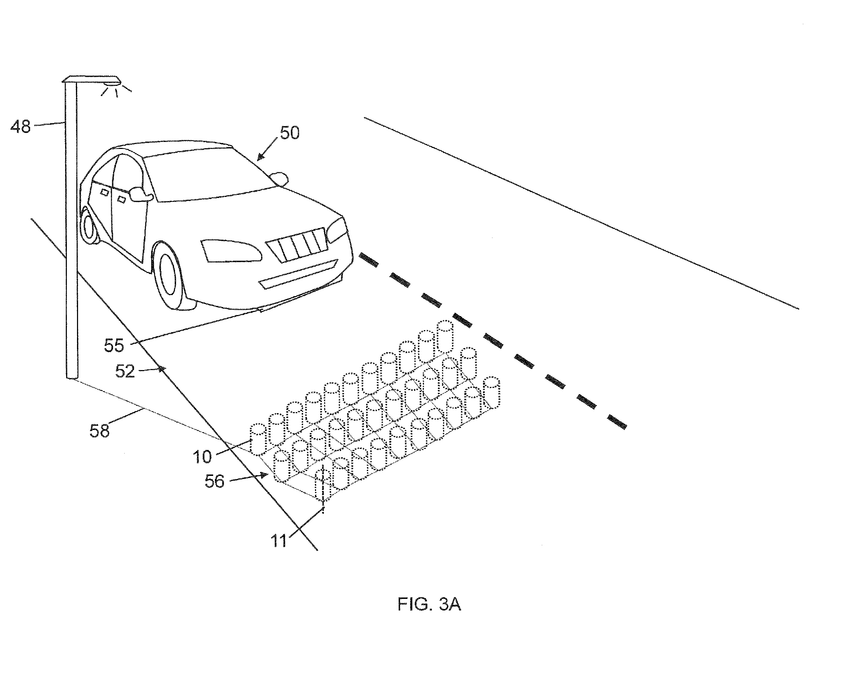

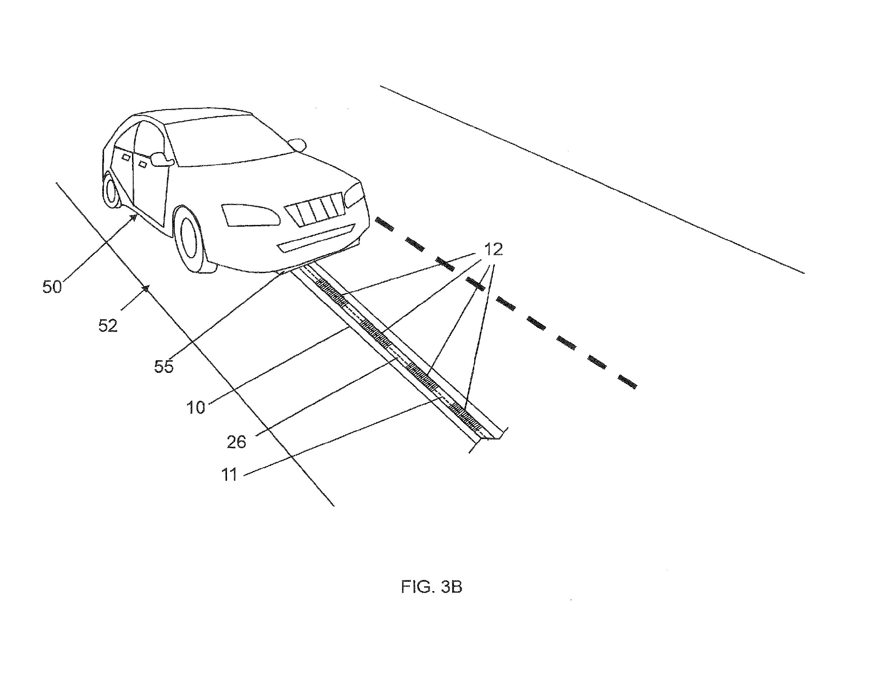

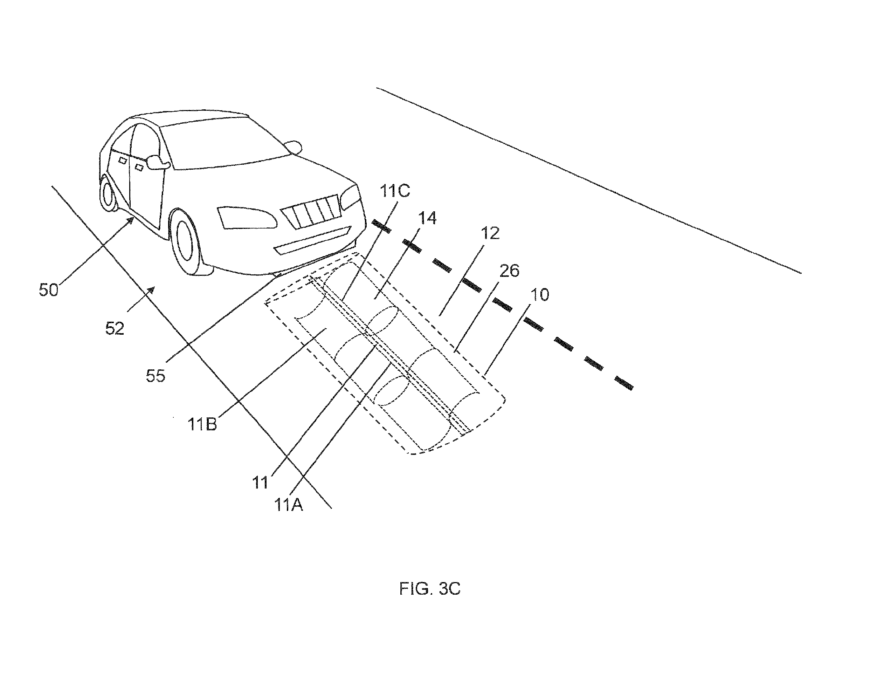

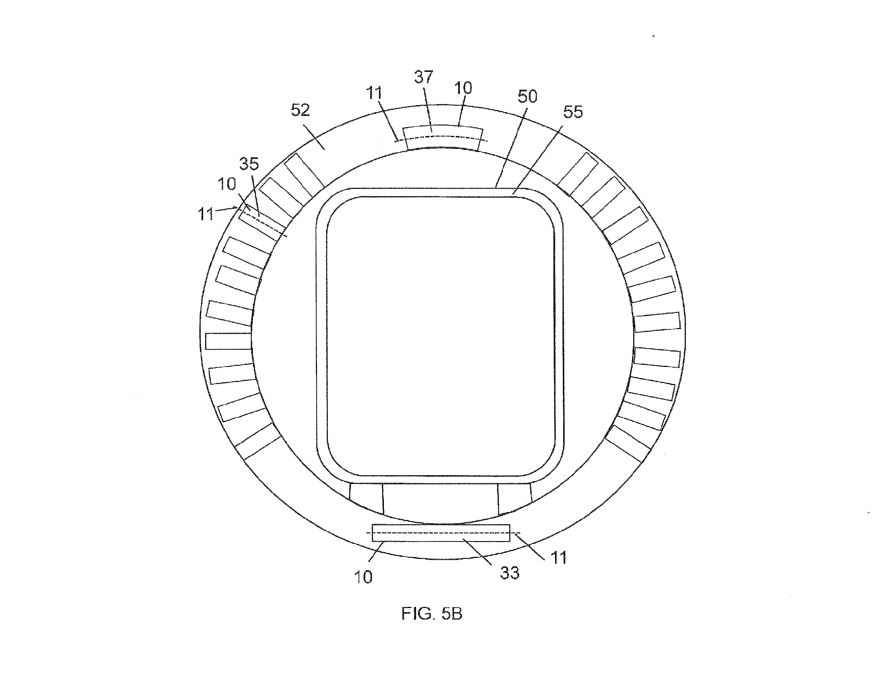

In certain embodiments, a generation unit 10 generally is positioned to influence a moving magnet 55 associated with the moving object 50 on the generation unit magnet 14. In certain embodiments, a generation unit 10 is positioned with respect to the path 52 of a moving object 50. A path 52 may include a road, a rail, railroad tie, a subway tunnel, or an elevator shaft, to name a few. The embodiments shown in FIG. 3A, FIG. 3B, FIG. 3C, and FIG. 4A include a path 52 configured as a road. The embodiment shown in FIG. 5B shows a path configured as a subway tunnel.

In the embodiment of FIG. 5B, generation units 10 are positioned with respect to a path 52 configured as a subway tunnel such that a moving object 50 configured as a subway car may influence the generation unit magnets 14 in the generation unit 10. In this embodiment, the moving magnet 55 may be configured as the frame of the subway car.

In certain embodiments, a generation unit 10 may be positioned with respect to a path 52 such that an axis 11 is generally perpendicular to a surface of the path 52, as shown in FIG. 3A, or generally parallel to a surface of the path 52, as shown in FIG. 3B and FIG. 4B. A generation unit 10 also may be positioned such that an axis 11 is generally tangential 33, generally radial 35, or generally arced 37 in relation to a surface of the path 52, as shown in FIG. 5B. Certain embodiments may include generation units 10 all positioned in the same relationship to the surface of the path 52 or may include generation units 10 in any combination of relationships to the surface of the path 52.

In certain embodiments, a generation unit 10 advantageously may be positioned with respect to the path 52 to utilize gravity to generate electricity. In a gravitational embodiment, a generation unit magnet 14 is positioned to move relative to the attraction of a moving magnet 55 associated with the moving object 50. After the moving magnet 55 is no longer in a position to influence the generation unit magnet 14, then the generation unit magnet 14 moves relative to the gravitational pull.

In certain embodiments, a generation unit 10 may be configured to permit rotational movement of a generation unit magnet 14 in response to the influence of a moving magnet 55. Such rotational embodiments may include generation unit magnets 14 positioned and configured to rotate about an axis 11. Certain embodiments include an axle 11A and one or more arms 11B. In certain embodiments, at least a portion of the one or more arms 11B are made from magnetic material, such that that the one or more arms 11B form one or more generation unit magnets 14. In certain embodiments, an arm 11B may be made from a material that is not magnetic, and a generation unit magnet 14 may be positioned on a surface or edge or otherwise be associated with one or more of the arms 11B.

In the embodiment shown in FIG. 3C, several arms 11B are connected to an axle 11A along a first edge 11C of each arm 11B. The arms 11B are sized, shaped, and configured to permit the influence of the moving magnet 55 on the generation unit magnet 14. Certain embodiments include one or more arms 11B that may be shaped in a half-cylinder shape, a helical shape, or any other shape that facilitates the rotation of generation unit magnets 14 around an axis 11. Also, the axle 11A and arms 11B shown in FIG. 3C are oriented such that the arms 11B rotate in a plane generally perpendicular to the surface of the path 52. However, in certain embodiments, an axle 11A may be oriented such that the arms 11B rotate in a plane generally parallel to the surface of the path 52. In certain embodiments, the arms 11B rotate about the axle 11Ain any orientation that permits generation of electricity within the induction coil 12.

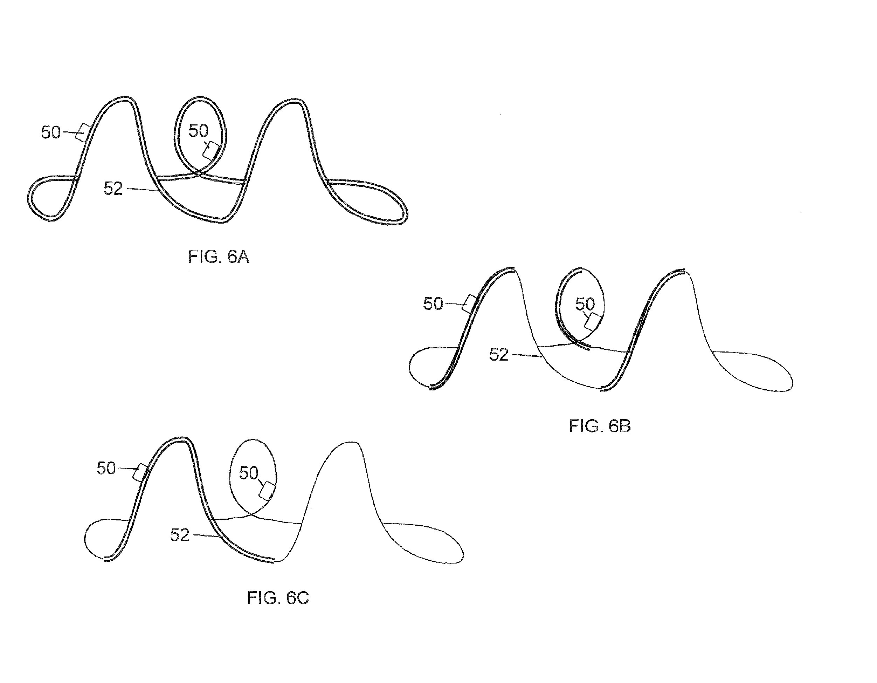

Embodiments of a generation unit 10 advantageously may be sized and shaped to form a continuous loop. Such continuous loop embodiments may be used in association with a path 52 such as a rollercoaster track - as shown in FIGS. 6A through 6C - or a road configured as a racetrack. Multiple moving objects 50 may be used to move a generation unit magnet 14 through a continuous loop generation unit 10. A moving magnet 55 associated with a moving object 50 may influence a generation unit magnet 14 for the entire continuous loop of the generation unit 10 - as shown by double lines in FIG. 6A - or may influence a generation unit magnet 14 for a portion of the continuous loop - as shown by double lines in FIG. 6B and FIG. 6C. In the embodiment shown in FIG. 6B, generation units 10 are positioned relative to the rollercoaster track generally where the rollercoaster cars would be travelling on an incline. In the embodiment shown in FIG. 6C, the generation units 10 are positioned relative to one incline and one decline in the rollercoaster track.

In certain embodiments, a generation unit 10 may be positioned with respect to a path 52 such that at least some part of the wall of the housing element 16 is not covered by the path 52. In such embodiments, any exposed wall of the housing element 16 may be configured from a material having sufficient strength to withstand ambient conditions and the weight of moving objects 50 such as vehicles. In certain embodiments, a generation unit 10 is positioned entirely below the surface of a path 52, as shown with dotted lines in FIGS. 3A-3C.

In certain embodiments, such as the embodiment shown in FIGS. 4A through 4C, the generation unit 10 may be positioned largely within an external conveying component 58, which, as described above, is configured to receive and transfer electricity outside of the generation unit 10. In such embodiments, an electrically powered article 48 also may be positioned adjacent to or within the external conveying component 58. The generation units 10 may be positioned and configured relative to the external conveying component 58 such that the generation units 10 generate and transfer electricity to power the electrically powered article 48 in advance of the moving object 50 reaching the electrically powered article 48.

In the embodiment shown in FIGS. 4A through 4C, the electrically powered article 48 is constructed to emit light upon the input of electricity. The electrically powered article 48 may also be configurable such that a variety of information may be conveyed by the same embodiment. The embodiment shown in FIG. 4A is configured to display an arrow.

In the embodiment shown in FIG. 4A through FIG. 4C, the external conveying component 58 is configured as a box 60 over which moving objects 50 may pass. A box 60 may include a top surface 62, a bottom surface 64, and one or more side surfaces 66. In this embodiment, the box 60 is made from conducting plastic. In certain embodiments, the box 60 also may include a covering such as an insulator (not shown). In certain embodiments, the box 60 may include only so much conducting plastic as to permit electricity to flow between the generation unit 10 and the electrically powered article 48.

In certain embodiments, more than one generation unit 10 may be installed relative to a path 52, as shown in FIGS. 3A - 3C, FIG. 4B, and FIG. 5B. More than one generation unit 10 - that is, a plurality 56 of generation units 10 - may be electrically connected to each other by an external conveying component 58. Embodiments of the plurality 56 of generation units 10 are wired in series to produce electricity output with synchronous polarity, while other embodiments of the plurality 56 of generation units 10 are wired in parallel.

An external conveying component 58 connecting one or more generation units 10 may connect to other elements using configurations and methods known in the art. Certain embodiments may include a rectifier such as a bridge rectifier or a single diode to convert alternating current ("AC") to direct current ("DC") as needed to store electricity or prevent reverse current flow. Certain embodiments may include one or more resistors, a commutator, a switch to achieve an "on" or "off' status, an inverter for converting direct current (DC) to alternating current (AC), or a power input element such as an AC plug.

Certain embodiments of an external conveying component 58 may connect to an energy storage component such as a capacitor or a battery so as to effectively and usefully store the electricity generated in the induction coils 12. In addition, an external conveying component 58 may connect one or more generation units 10 to an electricity distribution grid such that energy stored in an energy storage component may be distributed to consumers.

An external conveying component 58 also may connect one or more generation units 10 to an electrically powered article 48, as discussed above with reference to FIGS. 4A through 4C. An electrically powered article 48 may include any article capable of using electricity. In certain embodiments, such as the embodiment shown in FIG. 3A, an electrically powered article 48 may be a configured as a light emitting diode (LED) street lamp. In such an embodiment, vehicles travelling on a road conveniently may provide electricity to a LED street lamp located adjacent to the generation unit 10 or located relative to the direction that a moving object 50 is moving such that the LED turns on in advance of the arrival of a moving object 50. A generation unit 10 may be configured to power a traffic light, speed detector, camera, railroad crossing signal, light in the cabin of a train car or elevator, or computer to program the movement of an elevator, to name a few. In certain embodiments, the electrically powered article 48 is configured with a communication component to send information to and receive information from a computer.

An external conveying component 58 further may connect to an electricity sensor such as an ammeter or a voltmeter capable of measuring the amount of electricity passing through the induction coil 12, internal conveying component 42, or external conveying component 58. An electricity sensor may be configured to send information - such as information regarding the amount of electricity passing through the induction coil 12 or the external conveying component 58 - to a computer. An electricity sensor also may be configured to receive information from a computer.

A computer having a processor and a memory may be configured to send information to or receive information from, for example, an electrically powered article, an electricity sensor, or a generation unit. In such embodiments, information may be processed by the processor and stored on the memory of the computer.

In response to the receipt of certain information, a computer - using a computer-readable algorithm in certain embodiments - may be configured to send specific information to other components. For example, in one embodiment, when a moving object 50 such as a car generates a certain threshold of electricity, the electricity sensor may send that information to a computer. The computer may send a message to activate a speed detector such as a radar gun capable of determining the speed of the car, for example, relative to the speed limit. The speed detector may send the information regarding the speed of the car to the computer, where the computer may provide an output to a law enforcement agency. The computer communication - that is, sending and receiving of information - is conducted by methods known in the art.

While the disclosure is susceptible to various modifications and alternative forms, specific exemplary embodiments have been shown by way of example in the drawings and have been described in detail. It should be understood, however, that there is no intent to limit the disclosure to the particular embodiments disclosed, but on the contrary, the intention is to cover all modifications, equivalents, and alternatives falling within the scope of the disclosure as defined by the appended embodiments.

## Claims

1. A system for generating electricity, comprised of:
a generation unit including a generation unit magnet and an induction coil;
said generation unit magnet positioned within a chamber;
said induction coil positioned relative to the chamber such that said generation unit magnet passes through a coil space defined by said induction coil while moving through the chamber;
wherein the generation unit is positioned with respect to a path such that a moving magnet associated with a moving object may influence movement of said generation unit magnet while said moving object moves relative to the path.

2. A system for generating electricity, comprised of:
a generation unit including a generation unit magnet and an induction coil;
said generation unit magnet physically connected to a moving object,
said moving object and said generation unit magnet positioned together within a chamber; and
said induction coil positioned relative to the chamber such that the generation unit magnet passes through a coil space defined by said induction coil as the moving object moves through the chamber.
